# EUROPÄISCHE PATENTSCHRIFT

(11) **EP 2 318 827 B1**
(45) Veröffentlichungstag und Bekanntmachung des Hinweises auf die Patenterteilung: **05.09.2012**
(21) Anmeldenummer: 09780095.7
(22) Anmeldetag: 02.07.2009
(51) Int. Cl.: G01N 29/04, G01N 29/24, G01N 21/17

(54) **Einrichtung zur zerstörungsfreien Ultraschallprüfung eines Werkstücks mit optoakustischer Anregung**
Device for nondestructive ultrasonic testing of a workpiece with optoacoustic excitation
Dispositif de contrôle non destructeur par ultrasons d'une pièce à usiner à l'aide d'une excitation opto-acoustique

(30) Priorität: 18.08.2008 EP 08014645
(43) Veröffentlichungstag der Anmeldung: 11.05.2011
(73) Patentinhaber: Siemens Aktiengesellschaft, 80333 München (DE)
(72) Erfinder: CLOSSEN-VON LANKEN SCHULZ, Michael, 47661 Issum (DE); OBERMAYR, Stefan, 45475 Mülheim (DE); OPHEYS, Michael, 41334 Nettetal (DE)
(86) Internationale Anmeldenummer: PCT/EP2009/058333
(87) Internationale Veröffentlichungsnummer: WO 2010/020461

(56) Entgegenhaltungen:
- WO-A-2007/135439
- US-A- 4 512 197
- COLLISON I J; STRATOUDAKI T; CLARK M; SOMEKH M G: "Measurement of elastic nonlinearity using remote laser ultrasonics and CHeap optical transducers and dual frequency surface acoustic waves" ULTRASONICS, Bd. 48, Nr. 6-7, November 2008 (2008-11), Seiten 471-477, XP002511548 available online 17 July 2008
- STRATOUDAKI T ET AL: "Cheap optical transducers (CHOTs) for narrowband ultrasonic applications" MEASUREMENT SCIENCE AND TECHNOLOGY, IOP, BRISTOL, GB, Bd. 18, Nr. 3, 1. März 2007 (2007-03-01), Seiten 843-851, XP020118559 ISSN: 0957-0233

## Beschreibung

Die Erfindung betrifft eine Einrichtung zur zerstörungsfreien Ultraschallprüfung eines Werkstücks.

Eine zerstörungsfreie Ultraschallprüfung eines Werkstücks ist eine Standardmethode der modernen Qualitätssicherung. Bei der Ultraschallprüfung werden in dem Werkstück Schallwellen erzeugt, die hinsichtlich ihrer Laufzeit und Intensität ausgewertet werden, worauf sich Rückschlüsse auf die innere Struktur und Beschaffenheit des Werkstücks machen lassen.

Die Erzeugung von Ultraschallwellen in dem Werkstück kann herkömmlich mit einem Optik-Schall-Wandler (CHOT; engl.: Cheap Optical Transducer) bewerkstelligt werden, der mit einem Laserstrahl aktiviert und gelesen wird. Durch CHOT wird in dem Werkstück nichtlinearer Ultraschall erzeugt, mit dem eine hohe Sensitivität beim Erkennen und Abbilden von einem frühen Stadium der Beschädigung des Werkstücks in Form von Mikrorissen erreicht werden kann. In Abhängigkeit von unterschiedlichen Spannungszuständen in dem Werkstück ergeben sich Änderungen in der Ultraschallgeschwindigkeit. CHOT eignet sich insbesondere zur Erzeugung von hochfrequenten Ultraschallwellen, die insbesondere bei nichtlinearen Verfahren Verwendung finden.

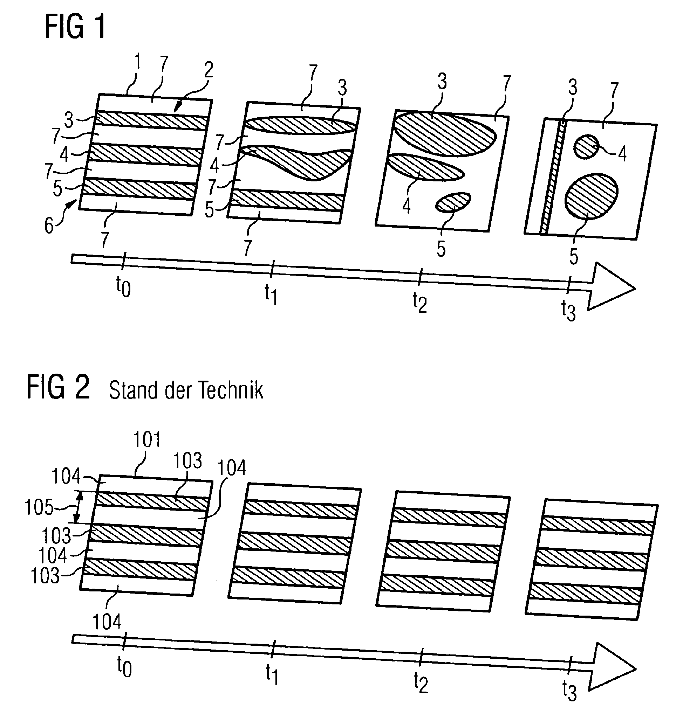

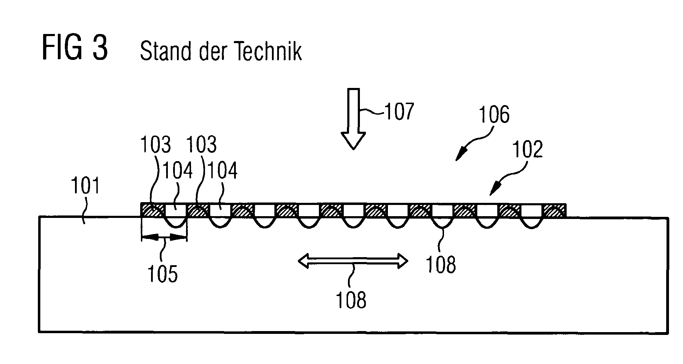

Wie es in Figuren 2 und 3 gezeigt ist, weist CHOT eine Beschichtung 102 auf, die auf die Oberfläche eines Werkstücks 101 aufgebracht ist. Die Beschichtung 102 ist gebildet von einer Mehrzahl von lichtundurchlässigen Streifen 103 und lichtdurchlässigen Streifen 104, wobei die Streifen 103 und 104 sich abwechselnd und im Abstand 105 zueinander angeordnet sind, so dass sich ein Muster 106 ergibt. Die Beschichtung 102 kann beispielsweise aus einem Glasssubstrat bestehen, auf das Aluminiumstreifen aufgedampft sind. So bilden die Aluminiumstreifen die lichtundurchlässigen Streifen 103 und die zwischen dem Aluminiumstreifen freiliegenden Bereiche des Glasssubstrats die lichtdurchlässigen Streifen 104. Wird die Beschichtung 102 mit einem Laserlicht 107 beschienen, so wird das Laserlicht 107 von den lichtundurchlässigen Streifen 103 absorbiert, wohingegen das Laserlicht 107 von den lichtdurchlässigen Streifen 104 nicht absorbiert wird. Hervorgerufen durch die Absorption des Laserlichts 107 von den lichtundurchlässigen Streifen 103 werden diese erwärmt, woraus sich eine thermische Ausdehnung in den Bereichen der lichtundurchlässigen Streifen 103 ergibt. Wird das Laserlicht 107 pulsierend ausgestrahlt, erfährt die Beschichtung 102 ein entsprechendes rhythmisches Ausdehnen und sich Zusammenziehen an den lichtundurchlässigen Streifen 103, so dass in dem Werkstück 101 Ultraschall 108 erzeugt wird. Wie es in Figur 2 gezeigt ist, ist zu allen Zeitpunkten t0 bis t3 das Muster 106 in seinem Aussehen konstant. Dadurch kann lediglich ein bestimmter Bereich des Werkstücks 101 untersucht werden, wobei das Werkstück 101 zweidimensional abgebildet ist.

In WO 2007/135439 A1 ist eine Ultraschallprüftechnik beschrieben, bei der Ultraschall in einem Werkstück mittels einer Beschichtung auf der Oberfläche des Werkstücks erzeugt wird, wobei zur Formung des Ultraschallfelds eine Laseranregung eingesetzt wird. Die Beschichtung weist ein Streifenmuster auf, das zu einem über die Zeit unveränderlichen Schallfeld führt.

In dem Dokument "Measurement of elastic nonlinearity using remote laser ultrasonics and cheap optical transducers and dual frequency surface acoustig waves", XP002511548 wird eine CHOT Einrichtung mit einer Beschichtung offenbart, die zumindest abschnittsweise auf die Oberfläche des Werkstücks aufbringbar ist.

Aufgabe der Erfindung ist es, eine Einrichtung zur zerstörungsfreien Ultraschallprüfung eines Werkstücks und ein Verfahren zum zerstörungsfreien Ultraschallprüfen des Werkstücks zu schaffen, mit der das Werkstück genau und variabel untersucht werden kann.

Die erfindungsgemäße Einrichtung zur zerstörungsfreien Ultraschallprüfung eines Werkstücks weist eine Beschichtung, die zumindest abschnittsweise auf die Oberfläche des Werkstücks aufbringbar ist und die ein zumindest eindimensional entlang der Oberfläche variiertes und zeitlich variierendes Kontrastmuster hat, und eine Lichtquelle zum Bestrahlen der Beschichtung mit pulsierendem Licht auf, so dass, wenn das Licht auf die Beschichtung trifft, das Licht entsprechend dem jeweils örtlich und zeitlich vorliegenden Kontrast des Kontrastmusters absorbiert wird, so dass in dem Werkstück ein Ultraschallfeld mit einer zeitlich variierten Ausbreitungsrichtung und einer zeitlich variierten Fokustiefe anregbar ist.

Bei der Ultraschallprüfung variiert zeitlich beispielsweise der Wert des Einschallwinkels in Abhängigkeit der Kontrastvariation der Beschichtung, so dass der Einschallwinkel bildgebend, beispielsweise in einem Winkelscan, dargestellt werden kann. Ferner kann die Fokustiefe eingestellt werden. Daraus ergibt sich vorteilhaft ein Ultraschallfeld mit einer bestimmten Ausbreitungsrichtung und einer bestimmten Fokustiefe.

Vorzugsweise ist das Kontrastmuster von mehreren lichtundurchlässigen Bereichen und mehreren lichtdurchlässigen Bereichen gebildet, wobei die lichtundurchlässigen Bereiche und die lichtdurchlässigen Bereiche nebeneinander und sich abwechselnd angeordnet sind. Dadurch ist vorteilhaft an dem Werkstück ein Kontrastmuster ähnlich der CHOT-Technik vorgesehen, wobei das Kontrastmuster zeitlich variiert.

Ferner ist es bevorzugt, dass die lichtundurchlässigen Bereiche über die Zeit ihre Form ändern, an die die lichtdurchlässigen Bereiche gleichzeitig angepasst sind. Somit können die lichtundurchlässigen Bereiche individuell verändert werden, die als eine Art "Flecken", die über die Zeit ihre Form ändern, auf den lichtdurchlässigen Bereichen ausgebildet sind.

Bevorzugt sind die lichtdurchlässigen Bereiche so gut wie vollständig transparent für das Licht. Dadurch ist vorteilhaft ein großer Kontrastunterschied zwischen den lichtundurchlässigen und den lichtdurchlässigen Bereichen erreicht, wodurch die Erzeugung von Ultraschall in dem Werkstück effektiv ist.

Außerdem sind bevorzugt die lichtundurchlässigen Bereiche Längsstreifen, deren Abstand sich über die Zeit vergrößert. Durch die Längsstreifen ist auf dem Werkstück ein Gitter ausgebildet, wobei die Abstände zwischen den einzelnen Längsstreifen einen bestimmten Winkel des Ultraschallsignals definieren. Hervorgerufen durch die Variation der Abstände des Gitters werden die Einschallwinkel variiert.

Die Beschichtung ist bevorzugt eine LCD-Folie, mit der entsprechend angesteuert das Kontrastmuster erzeugbar ist. Die LCD-Folie ist handelsüblich und kann kostengünstig in großen Stückzahlen bezogen werden, so dass die erfindungsgemäße Einrichtung zur zerstörungsfreien Ultraschallprüfung kostengünstig ist.

Bevorzugt ist das Licht Laserlicht, wodurch effektiv in dem Werkstück Ultraschall erzeugt wird.

Das erfindungsgemäße Verfahren zum zerstörungsfreien Ultraschallprüfen eines Werkstücks weist die Schritte auf: Bereitstellen einer Beschichtung, die die ein zumindest eindimensional entlang der Oberfläche variiertes und zeitlich variierendes Kontrastmuster hat; Aufbringen der Beschichtung zumindest abschnittsweise auf das Werkstück; Variieren des Kontrastmusters über die Zeit und gleichzeitiges Bestrahlen der Beschichtung mit pulsierendem Licht, so dass das Licht entsprechend dem jeweils örtlich und zeitlich vorliegenden Kontrast des Kontrastmusters absorbiert wird, so dass in dem Werkstück ein Ultraschallfeld mit einer zeitlich variierten Ausbreitungsrichtung und einer zeitlich variierten Fokustiefe angeregt wird; Erzeugen eines dreidimensionalen Bilds des Werkstücks anhand des Ultraschallfelds.

Hierbei ist bevorzugt, dass das Kontrastmuster von mehreren lichtdurchlässigen Bereichen und mehreren lichtundurchlässigen Bereichen gebildet wird, wobei die lichtundurchlässigen Bereiche und die lichtdurchlässigen Bereiche nebeneinander und sich abwechselnd angeordnet werden. Bevorzugt ist es außerdem, dass die lichtdurchlässigen Bereiche über die Zeit ihre Form ändern, an die die lichtdurchlässigen Bereiche gleichzeitig angepasst werden. Ferner ist es bevorzugt, dass beim Variieren des Kontrastmusters über die Zeit am Beginn die lichtundurchlässigen Bereiche Längsstreifen sind, deren Abstand sich über die Zeit vergrößert. Beim Variieren des Kontrastmusters über die Zeit sind bevorzugt am Beginn die lichtundurchlässigen Bereiche Längsstreifen, die nach und nach die Form von Flecken einnehmen.

Im Folgenden wird eine bevorzugte Ausführungsform der erfindungsgemäßen Einrichtung zur zerstörungsfreien Ultraschallprüfung eines Werkstücks anhand der beigefügten schematischen Zeichnung erläutert. Es zeigt:
Figur 1 das Ausführungsbeispiel der erfindungsgemäßen Einrichtung zur zerstörungsfreien Ultraschallprüfung eines Werkstücks,
Figur 2 eine herkömmliche Einrichtung zur zerstörungsfreien Ultraschallprüfung eines Werkstücks und
Figur 3 einen Längsschnitt des in Figur 2 gezeigten Werkstücks.

Wie es aus Figur 1 ersichtlich ist, ist auf der Oberfläche eines zu untersuchenden Werkstücks 1 eine Beschichtung 2 aufgebracht. Die Beschichtung 2 besteht aus einem ersten lichtundurchlässigen Bereich 3, einem zweiten lichtundurchlässigen Bereich 4 und einem dritten lichtundurchlässigen Bereich 5, die auf einem hellen Bereich 7 aufgebracht sind. Die lichtundurchlässigen Bereiche 3 bis 5 ändern ihre Gestalt über die Zeit t0 bis t3.

Zum Zeitpunkt t0 sind die lichtundurchlässigen Bereiche 3 bis 5 als parallel zueinander verlaufende, gleich breite Streifen ausgebildet, so dass die Beschichtung 2 ein Muster 6 aufweist, das einem Streifenmuster gleicht. Zum Zeitpunkt t1, der nach dem Zeitpunkt t0 liegt, ist die Form des dritten lichtundurchlässigen Bereichs 5 verglichen mit der Form zum Zeitpunkt t0 gleich geblieben, wohingegen die lichtundurchlässigen Bereiche 3 und 4 ihre Form dahingehend geändert haben, dass sie eine wellige Kontur angenommen haben. Zum Zeitpunkt t2, der nach dem Zeitpunkt t1 liegt, haben sich die lichtundurchlässigen Bereiche 3 bis 5 als fleckenartige Gebilde ausgebildet. Zum Zeitpunkt t3, der nach dem Zeitpunkt t2 liegt, hat sich der erste lichtdurchlässige Bereich 3 wieder zu einem Streifen geformt, der jedoch senkrecht zu dem lichtundurchlässigen Bereich 3 zum Zeitpunkt t0 verläuft. Die lichtundurchlässigen Bereiche 4 und 5 haben eine scheibenartige Form angenommen, wobei die Fläche des lichtundurchlässigen Bereichs 4 zum Zeitpunkt t2 größer ist als zum Zeitpunkt t3 und die Fläche des dritten lichtundurchlässigen Bereichs 5 zum Zeitpunkt t2 kleiner ist als zum Zeitpunkt t3. Über die Zeit von Zeitpunkt t0 bis zum Zeitpunkt t3 haben somit die lichtundurchlässigen Bereiche 3 bis 5 ihre Form verändert, sich aber nicht verschmolzen.

## Patentansprüche

1. Einrichtung zur zerstörungsfreien Ultraschallprüfung eines Werkstücks (1), mit einer Beschichtung (2), die zumindest abschnittsweise auf die Oberfläche des Werkstücks (1) aufbringbar ist und die ein zumindest eindimensional entlang der
Oberfläche variiertes Kontrastmuster (6) hat, und einer Lichtquelle zum Bestrahlen der Beschichtung mit pulsierendem Licht, so dass, wenn das Licht auf die Beschichtung (2) trifft, das Licht entsprechend dem jeweils örtlich vorliegenden Kontrast des Kontrastmusters (6) absorbiert wird,
**dadurch gekennzeichnet, dass**
die Beschichtung (2) ein zeitlich variierendes Kontrastmuster (6) hat, wobei das Licht so auf die Beschichtung (2) trifft, dass das Licht entsprechend dem jeweils zeitlich variierenden Kontrast des Kontrastmusters (6) absorbiert wird,
so dass in dem Werkstück (1) ein Ultraschallfeld mit einer zeitlich variierten Ausbreitungsrichtung und einer zeitlich variierten Fokustiefe anregbar ist.

2. Einrichtung gemäß Anspruch 1, wobei das Kontrastmuster (6) von mehreren lichtundurchlässigen Bereichen (3 bis 5) und mehreren lichtdurchlässigen Bereichen (7) gebildet ist, wobei die lichtundurchlässigen Bereiche (3 bis 5) und die lichtdurchlässigen Bereiche (7) nebeneinander und sich abwechselnd angeordnet sind.

3. Einrichtung gemäß Anspruch 2, wobei die lichtundurchlässigen Bereiche (3 bis 5) über die Zeit ihre Form ändern, an die die lichtdurchlässigen Bereiche (7) gleichzeitig angepasst sind.

4. Einrichtung gemäß einem der Ansprüche 2 oder 3, wobei die lichtdurchlässigen Bereiche (7) so gut wie vollständig transparent für das Licht sind.

5. Einrichtung gemäß Anspruch 4, wobei die lichtundurchlässigen Bereiche Längsstreifen sind, deren Abstand sich über die Zeit vergrößert.

6. Einrichtung gemäß einem der Ansprüche 1 bis 5, wobei die Beschichtung (2) eine LCD-Folie ist, mit der entsprechend angesteuert das Kontrastmuster (6) erzeugbar ist.

7. Einrichtung gemäß einem der Ansprüche 1 bis 6, wobei das Licht Laserlicht ist.

8. Verfahren zum zerstörungsfreien Ultraschallprüfen eines Werkstücks (1), mit den Schritten:
Bereitstellen einer Beschichtung (2), die ein zumindest eindimensional entlang der Oberfläche variiertes und zeitlich variierendes Kontrastmuster (6) hat;
Aufbringen der Beschichtung (2) zumindest abschnittsweise auf das Werkstück (1);
Variieren des Kontrastmusters (6) über die Zeit und gleichzeitiges Bestrahlen der Beschichtung (2) mit pulsierendem Licht, so dass das Licht entsprechend dem jeweils örtlich und zeitlich vorliegenden Kontrast des Kontrastmusters (6) absorbiert wird, so dass in dem Werkstück (1) ein Ultraschallfeld mit einer zeitlich variierten Ausbreitungsrichtung und einer zeitlich variierten Fokustiefe angeregt wird;
Erzeugen eines dreidimensionalen Bilds des Werkstücks (1) anhand des Ultraschallfelds.

9. Verfahren gemäß Anspruch 8, wobei das Kontrastmuster (6) von mehreren lichtundurchlässigen Bereichen (3 bis 5) und mehreren lichtdurchlässigen Bereichen (7) gebildet wird, wobei die lichtundurchlässigen Bereiche (3 bis 5) und die lichtdurchlässigen Bereiche (7) nebeneinander und sich abwechselnd angeordnet werden.

10. Verfahren gemäß Anspruch 9, wobei die lichtundurchlässigen Bereiche (3 bis 5) über die Zeit ihre Form ändern, an die die lichtdurchlässigen Bereiche (7) gleichzeitig angepasst werden.

11. Verfahren gemäß Anspruch 10, wobei beim Variieren des Kontrastmusters (6) über die Zeit am Beginn die lichtundurchlässigen Bereiche (3 bis 5) Längsstreifen sind, deren Abstand sich über die Zeit vergrößert.

12. Verfahren gemäß Anspruch 10, wobei beim Variieren des Kontrastmusters (6) über die Zeit am Beginn die lichtundurchlässigen Bereiche Längsstreifen sind, die nach und nach die Form von Flecken einnehmen.

## Claims

1. Device for non-destructive ultrasonic testing of a workpiece (1), having a coating (2) which can, at least in sections, be applied to the surface of the workpiece (1) and has a contrast pattern (6) that varies in at least one dimension along the surface, and a light source for irradiating the coating with pulsating light such that, when the light is incident on the coating (2), the light is absorbed in accordance with the respectively locally present contrast of the contrast pattern (6),
**characterized in that**
the coating (2) has a time-varying contrast pattern (6), with the light being incident on the coating (2) such that the light is absorbed in accordance with the respective time-varying contrast of the contrast pattern (6),
such that it is possible to excite an ultrasonic field in the workpiece (1), with a time-varying propagation direction and a time-varying focal depth.

2. Device according to Claim 1, wherein the contrast pattern (6) is made up of a plurality of opaque regions (3 to 5) and a plurality of light-permeable regions (7), the opaque regions (3 to 5) and the light-permeable regions (7) being arranged next to one another and in alternating fashion.

3. Device according to Claim 2, wherein the opaque regions (3 to 5) change their shape with time, to which shape the light-permeable regions (7) are matched at the same time.

4. Device according to either of Claims 2 or 3, wherein the light-permeable regions (7) are virtually completely transparent to the light.

5. Device according to Claim 4, wherein the opaque regions are longitudinal strips, the spacing between which increases with time.

6. Device according to one of Claims 1 to 5, wherein the coating (2) is an LCD film, by means of which, when actuated appropriately, the contrast pattern (6) can be produced.

7. Device according to one of Claims 1 to 6, wherein the light is laser light.

8. Method for non-destructive ultrasonic testing of a workpiece (1), comprising the steps of:
providing a coating (2) that varies in at least one dimension along the surface and has a time-varying contrast pattern (6);
applying the coating (2), at least in sections, to the workpiece (1);
varying the contrast pattern (6) with time and simultaneously irradiating the coating (2) with pulsating light such that the light is absorbed in accordance with the respective contrast of the contrast pattern (6) present locally at that time, such that an ultrasonic field is excited in the workpiece (1), with a time-varying propagation direction and a time-varying focal depth;
generating a three-dimensional image of the workpiece (1) on the basis of the ultrasonic field.

9. Method according to Claim 8, wherein the contrast pattern (6) is made up of a plurality of opaque regions (3 to 5) and a plurality of light-permeable regions (7), the opaque regions (3 to 5) and the light-permeable regions (7) being arranged next to one another and in alternating fashion.

10. Method according to Claim 9, wherein the opaque regions (3 to 5) change their shape with time, to which shape the light-permeable regions (7) are matched at the same time.

11. Method according to Claim 10, wherein, during the variation of the contrast pattern (6) with time, the opaque regions (3 to 5) initially are longitudinal strips, the spacing between which increases with time.

12. Method according to Claim 10, wherein, during the variation of the contrast pattern (6) with time, the opaque regions initially are longitudinal strips, which more and more assume the shape of spots.

## Revendications

1. Dispositif de contrôle non destructeur par ultrasons d'une pièce ( 1 ) ayant un revêtement ( 2 ), qui peut être déposé au moins par endroit sur la surface de la pièce ( 1 ) et
qui a un motif (6) de contraste varié au moins unidimensionnellement le long de la surface et une source lumineuse pour exposer le revêtement à de la lumière pulsée, de manière à ce que, lorsque la lumière arrive sur le revêtement (2), la lumière soit absorbée conformément au contraste présent localement du motif ( 6 ) de contraste,
**caractérisé en ce que**
le revêtement ( 2 ) a un motif ( 6 ) de contraste variant dans le temps, la lumière arrivant sur le revêtement ( 2 ), de manière à ce que la lumière soit absorbée conformément au contraste variant dans le temps du motif ( 6 ) de contraste,
de manière à pouvoir exciter dans la pièce ( 1 ) un champ d'ultrasons ayant une direction de propagation qui varie dans le temps et une profondeur de foyer qui varie dans le temps.

2. Dispositif suivant la revendication 1, dans lequel le motif ( 6 ) de contraste est formé de plusieurs zones ( 3 à 5 ) imperméables à la lumière et de plusieurs zones ( 7 ) perméables à la lumière, les zones ( 3 à 5 ) imperméables à la lumière et les zones ( 7 ) perméables à la lumière étant disposées les unes à côté des autres et en alternance.

3. Dispositif suivant la revendication 2, dans lequel les zones ( 3 à 5 ) imperméables à la lumière modifient en fonction du temps leur forme, à laquelle les zones ( 7 ) perméables à la lumière sont adaptées en même temps.

4. Dispositif suivant l'une des revendications 2 ou 3, dans lequel les zones ( 7 ) perméables à la lumière sont pour ainsi dire entièrement transparentes à la lumière.

5. Dispositif suivant la revendication 4, dans lequel les zones imperméables à la lumière sont des bandes longitudinales, dont l'écartement s'agrandit en fonction du temps.

6. Dispositif suivant l'une des revendications 1 à 5, dans lequel le revêtement ( 2 ) est une feuille LCD, par laquelle le motif ( 6 ) de contraste, en étant commandé en conséquence, peut être produit.

7. Dispositif suivant l'une des revendications 1 à 6, dans lequel la lumière est de la lumière laser.

8. Procédé de contrôle non destructeur par ultrasons d'une pièce ( 1 ), comprenant les stades dans lesquels :
on se procure un revêtement ( 2 ), qui a un motif ( 6 ) de contraste qui varie, au moins unidimensionnellement le long de la surface, et qui varie dans le temps;
on dépose le revêtement ( 2 ), au moins par endroit, sur la pièce ( 1 );
on fait varier le motif ( 6 ) de contraste en fonction du temps et on expose en même temps le revêtement ( 2 ) à de la lumière pulsée, de manière à absorber la lumière conformément au contraste du motif ( 6 ) de contraste présent localement et temporellement, de manière à exciter dans la pièce ( 1 ) un champ d'ultrasons ayant une direction de propagation qui varie dans le temps et une profondeur de foyer qui varie dans le temps;
on produit une image tridimensionnelle de la pièce ( 1 ) au moyen du champ d'ultrasons.

9. Procédé suivant la revendication 8, dans lequel on forme le motif ( 6 ) de contraste de plusieurs zones ( 3 à 5 ) imperméables à la lumière et de plusieurs zones ( 7 ) perméables à la lumière, les zones ( 3 à 5 ) imperméables à la lumière et les zones ( 7 ) perméables à la lumière étant déposées les unes à côté des autres et en alternance.

10. Procédé suivant la revendication 9, dans lequel les zones ( 3 à 5 ) imperméables à la lumière modifient en fonction du temps leur forme, à laquelle les zones ( 7 ) perméables à la lumière sont adaptées en même temps.

11. Procédé suivant la revendication 10, dans lequel, lorsque l'on fait varier le motif ( 6 ) de contraste en fonction du temps au début, les zones ( 3 à 5 ) imperméables à la lumière sont des bandes longitudinales, qui s'écartent de plus en plus en fonction du temps.

12. Procédé suivant la revendication 10, dans lequel, lorsque l'on fait varier le motif ( 6 ) de contraste en fonction du temps au début, les zones imperméables à la lumière sont des bandes longitudinales, qui prennent peu à peu la forme de tâches.
